# EUROPEAN PATENT APPLICATION

(11) **EP 4 415 394 A1**
(43) Date of publication of application: **14.08.2024**
(21) Application number: 24157447.4
(22) Date of filing: 13.02.2024
(51) Int. Cl.: H04W 4/029, H04W 4/80, H04W 84/18, H04W 8/00, H04W 4/021, H04W 4/35

(54) **SYSTEM AND METHOD FOR CONTROLLING OPERATION OF MONITORING DEVICES ASSOCIATED WITH SHIPMENTS AND STORAGE SPACES**

(30) Priority: 13.02.2023 US 202363484647 P
(71) Applicant: Carrier Corporation, Palm Beach Gardens, FL 33418 (US)
(72) Inventor: KUMAR, Sujeet, 500081 Hyderabad (IN); MUNIANDY, Ramesh Babu, 500081 Hyderabad (IN)
(74) Representative: Dehns

(57) **Abstract**

A system (100, 200) to control the operation of monitoring devices (102) associated with shipments is disclosed. The system (100, 200) comprises multiple monitoring devices (102) installed in container(s) (104) associated with a shipment, where a unique trip-id is assigned to each monitoring device (102). The monitoring devices (102) are configured to be switched between a first mode, and a second mode. The monitoring device (102) in the first mode transmits a set of beacon signals comprising data pertaining to the trip-id and a status indicative of the first mode. The monitoring device (102) in the second mode detects and extracts the trip-id and the status from the detected beacon signals. The monitoring device (102) in the second mode automatically switches to the first mode upon a negative matching of the extracted status and the status of the corresponding monitoring device (102) and a positive matching of the extracted trip-id and the trip-id of the corresponding monitoring device (102).

## Description

### CROSS-REFERENCE TO RELATED APPLICATION

This patent application claims the benefit of US Provisional Patent Application No. 63/484,647, filed on Feb 13, 2023, which is incorporated by reference herein in its entirety.

### BACKGROUND

This invention relates to the field of trip monitoring systems and methods, and more particularly, to a system and method for controlling the operation of Bluetooth-based monitoring devices associated with shipments and storage spaces.

Existing monitoring devices employed in containers of shipments and/or storage spaces are typically Bluetooth-based, which monitor ambient conditions of the containers or the storage space and log the monitored ambient conditions as logged data in their local memory. These monitoring devices are started manually or via Bluetooth (BLE) by users to monitor the ambient conditions when a trip is in transit or before the start of trip and again manually stopped at a destination location to extract the logged data. Once the device is at the destination location, the users use Bluetooth connectivity and/or a USB channel to extract the logged data. However, sometimes the user may forget to switch back the monitoring device to start mode while placing the device in the containers or storage space, which may lead to trip being not monitored during the transit.

### SUMMARY

Described herein is a system to control operation of monitoring devices associated with shipments. The system comprises a plurality of monitoring devices assigned to and installed in one or more container associated with a shipment, wherein a unique trip-id is assigned to each of the monitoring devices during a trip. Each of the monitoring devices is configured to be switched between a first mode, and a second mode. The monitoring device in the first mode is configured to generate and transmit, at a predefined interval, a set of beacon signals comprising data pertaining to the trip-id and a status indicative of the first mode, and the monitoring device in the second mode is configured to automatically switch to the first mode upon detecting and analyzing the set of beacon signals.

Optionally, in one or more embodiments, the monitoring device in the second mode is configured to detect the set of beacon signals generated by at least one of the monitoring devices that is in the first mode, extract the trip-id and the status from the detected beacon signals, and automatically switch from the second mode to the first mode upon a negative matching of the extracted status and the status of the corresponding monitoring device and a positive matching of the extracted tri-id and the trip-id of the corresponding monitoring device.

Optionally, in one or more embodiments, the first mode corresponds to a start mode of operation where the monitoring device monitors and stores one or more attributes associated with the container, and wherein the second mode corresponds to a stop mode of operation where the attributes monitoring by the corresponding monitoring device is stopped.

Optionally, in one or more embodiments, the monitoring devices in the second mode are configured to be operatively connected to one or more external devices to allow extraction of stored data pertaining to the monitored attributes of the container.

Optionally, in one or more embodiments, each of the monitoring devices comprises a Bluetooth module that enables the generation and transmission of the set of beacon signals in the first mode and enables the detection of the set of beacon signals in the second mode

Optionally, in one or more embodiments, each of the monitoring devices comprises one or more sensor to monitor the attributes of the one or more container, and a data recorder to store the monitored attributes.

Optionally, in one or more embodiments, each of the monitoring devices comprises a processing unit operatively coupled to one or more of the one or more sensor, the Bluetooth module, and the data recorder. The processing unit comprises a processor coupled to a memory storing instructions executable by the processor and configured to enable the one or more sensor to monitor the attributes of the one or more container in the first mode, enable the Bluetooth module to generate and transmit the set of beacon signals at the predefined interval in the first mode, enable the Bluetooth module to detect the set of beacon signals in the first mode, and switch the monitoring devices from the second mode to the first mode based on the analysis of the set of beacon signals.

Also described herein is a system to control operation of monitoring devices associated with an area of interest (AOI). The system comprises a plurality of monitoring devices assigned to and installed at one or more location in the AOI, wherein a unique id is assigned to each of the monitoring devices. Each of the monitoring devices is configured to be switched between a first mode, and a second mode. The monitoring device in the first mode is configured to generate and transmit, at a predefined interval, a set of beacon signals comprising data pertaining to the unique id of the corresponding monitoring device and a status indicative of the first mode, and the monitoring device in the second mode is configured to automatically switch to the first mode upon detecting and analyzing the set of beacon signals.

Optionally, in one or more embodiments, the monitoring device in the second mode is configured to detect the set of beacon signals generated by at least one of the monitoring devices that is in the first mode, extract the unique id and the status from the detected beacon signals, and automatically switch from the second mode to the first mode upon a negative matching of the extracted status and the status of the corresponding monitoring device and a positive matching of the extracted unique id and the unique id of the corresponding monitoring device.

Optionally, in one or more embodiments, wherein the first mode corresponds to a start mode of operation where the monitoring device monitors and stores one or more attributes associated with the AOI, and wherein the second mode corresponds to a stop mode of operation where the attributes monitoring by the corresponding monitoring device is stopped.

Optionally, in one or more embodiments, the monitoring devices in the second mode are configured to be operatively connected to one or more external devices to allow extraction of stored data pertaining to the monitored attributes of the one or more location.

Optionally, in one or more embodiments, each of the monitoring devices comprises a Bluetooth module that enables the generation and transmission of the set of beacon signals in the first mode and enables the detection of the set of beacon signals in the second mode.

Optionally, in one or more embodiments, each of the monitoring devices comprises one or more sensor to monitor the attributes of the AOI, and a data recorder to store the monitored attributes.

Optionally, in one or more embodiments, each of the monitoring devices comprises a processing unit operatively coupled to one or more of the one or more sensor, the Bluetooth module, and the data recorder. The processing unit comprises a processor coupled to a memory storing instructions executable by the processor and configured to enable the one or more sensor to monitor the attributes of the AOI in the first mode, enable the Bluetooth module to generate and transmit the set of beacon signals in the first mode at the predefined interval, enable the Bluetooth module to detect the set of beacon signals in the first mode, and switch the monitoring devices from the second mode to the first mode based on the analysis of the set of beacon signals.

Further described herein is a method for controlling operation of monitoring devices associated with an area of interest (AOI). The method comprising the steps of: generating, by a plurality of monitoring devices that are assigned a unique trip-id and installed at one or more location in the AOI, a set of beacon signals when the corresponding monitoring device is operating in a first mode, wherein the set of beacon signals comprises data pertaining to the unique id and a status indicative of the first mode; and detecting, by the plurality of monitoring devices, the set of beacon signals when the corresponding monitoring device is operating in a second mode. The monitoring devices in the second mode are configured to automatically switch to the first mode based on analysis of the detected beacon signals.

Optionally, in one or more embodiments, the method comprises the steps of: detecting, by the monitoring device in the second mode, the set of beacon signals generated by at least one of the monitoring devices that is in the first mode; extracting, by the monitoring device in the second mode, the unique id and the status from the detected beacon signals; and automatically switching the monitoring devices from the second mode to the first mode upon a negative matching of the extracted status and the status of the corresponding monitoring device and a positive matching of the extracted trip-id and the trip-id of the corresponding monitoring device.

Optionally, in one or more embodiments, the method comprises the steps of operatively connecting the monitoring devices in the second mode to one or more external devices to allow extraction of stored data pertaining to the monitored attributes of the AOI

Optionally, in one or more embodiments, the AOI is one or more container associated with a shipment.

Optionally, in one or more embodiments, the AOI is one or more room associated with a storage area.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure. The drawings illustrate exemplary embodiments of the subject disclosure and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an exemplary representation of the system for controlling the monitoring devices of a container or a truck associated with a shipment in accordance with one or more embodiments of the invention.
FIG. 2 illustrates an exemplary representation of the system for controlling monitoring devices of an area of interest or storage space in accordance with one or more embodiments of the invention.
FIG. 3 is a schematic diagram illustrating the functional modules of the monitoring devices of FIGs. 1 and 2.
FIG. 4 illustrates an exemplary representation depicting the automated switching operation of monitoring devices to elaborate upon the working of the invention.
FIG. 5 is a flow diagram illustrating an exemplary embodiment of a method for controlling the operation of monitoring devices associated with an area of interest (AOI)in accordance with one or more embodiments of the invention.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

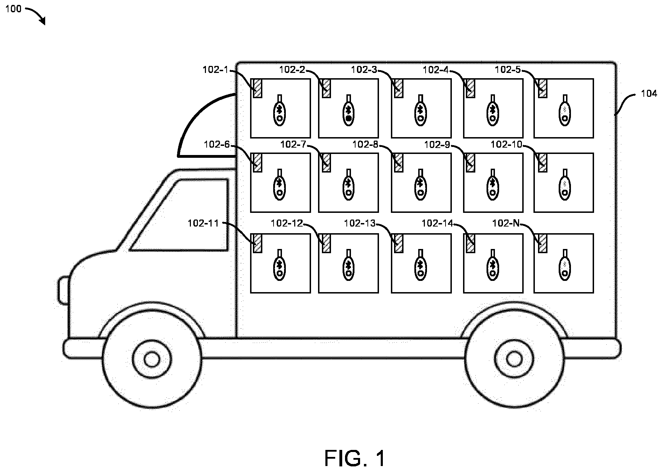

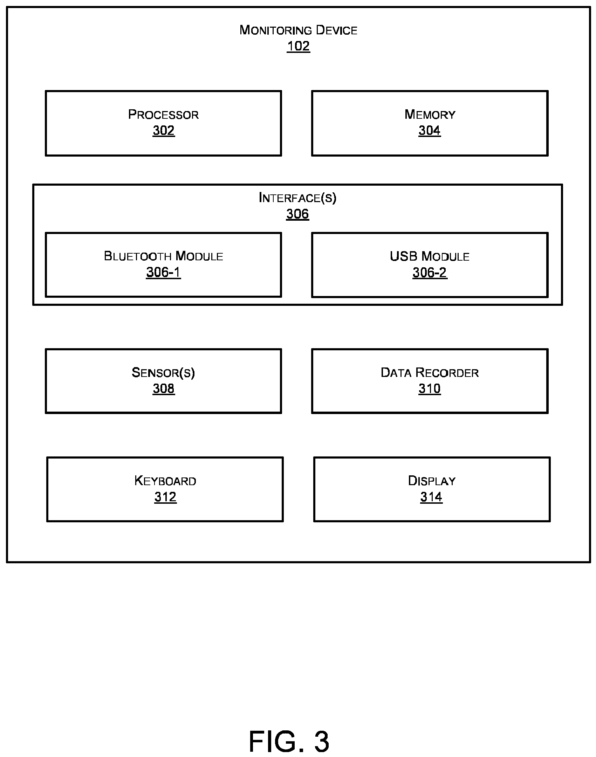

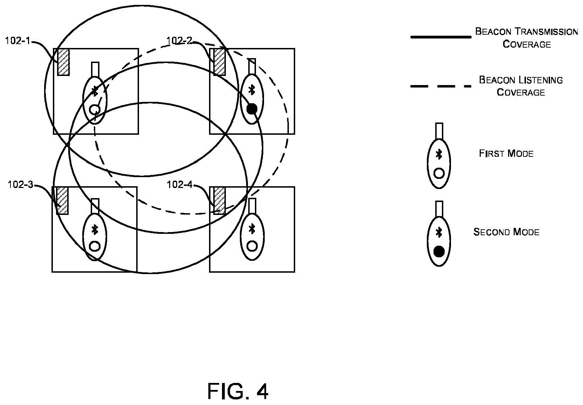

Referring to FIG. 1, a system for controlling the monitoring devices of a container or a truck associated with a shipment is disclosed. The system 100 may include multiple monitoring devices 102-1 to 102-N (collectively referred to as monitoring devices 102, herein) that may be configured in one or more containers 104 (collectively referred to as containers 104 or individually referred to as container 104, herein) assigned by the shipment service provider for a shipment. The monitoring devices 102 associated with a single shipment may be assigned a unique trip-id. These monitoring devices 102 may be configured to monitor attributes of different zones within the corresponding container 104. The detailed operation and functional modules of the monitoring device 102 are described further in conjunction with FIG. 3 and 4. The container 104 can be a movable container such as a trailer, box truck, and the like, and the zones can be a freezer, cooler, ambient zone, and the like.

The monitoring devices 102 may be configured to be switched between a first mode, and a second mode. The first mode may correspond to a start mode of operation where the monitoring device monitors the attributes associated with the containers 104. The second mode may correspond to a stop mode of operation where the attributes monitoring of the containers 104 by the corresponding monitoring device 102 is stopped, however, the monitoring device 102 remains in a switched-on condition.

Further, the monitoring devices 102 in the second/stop mode may be configured to be operatively connected to one or more external devices (not shown) to allow the extraction of stored data pertaining to the monitored attributes of the containers 104. The external devices may be one or more of mobile phones, computers, laptops, tablets, servers, databases, and the like, where the attributes monitored/recorded by the monitoring devices during transit may be stored when the shipment reaches intermediate locations or a destination during a trip. In one or more embodiments, the external devices may be wirelessly connected to the monitoring devices through a network to allow the extraction of stored data pertaining to the monitored attributes of the containers 104. In one or more embodiments, the external devices may be operatively connected to the monitoring devices 102 through a USB channel or wired media to allow the extraction of stored data pertaining to the monitored attributes of the containers 104.

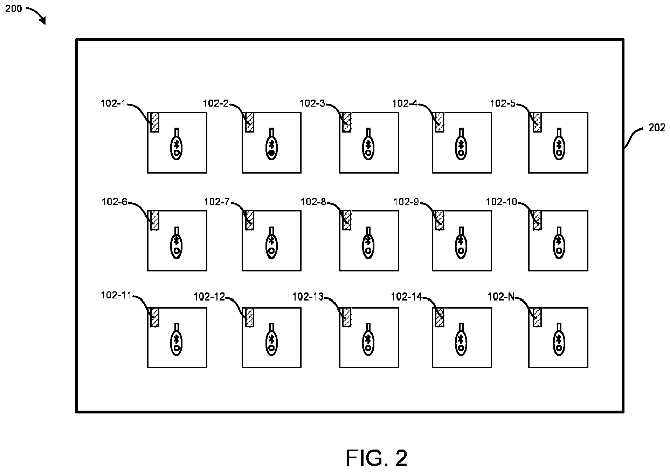

Referring to FIG. 2, system for controlling monitoring devices of an area of interest (AOI) is disclosed. The system 200 may include multiple monitoring devices 102-1 to 102-N (collectively referred to as monitoring devices 102, herein) that may be installed at one or more locations of an AOI 202, which may be assigned by a service provider for storage and logistics operations. The monitoring devices 102 associated with the AOI 202 may be assigned a unique id. These monitoring devices 102 may be configured to monitor attributes of different zones or locations within the corresponding AOI 202. The detailed operation and functional modules of the monitoring device 102 are described further in conjunction with FIG. 3 and 4. The AOI 202 may be a storage space, warehouse, and the like, and the zones can be a freezer, cooler, ambient zone, and the like at the AOI.

The monitoring devices 102 may be configured to be switched between a first mode, and a second mode. The first mode may correspond to a start mode of operation where the monitoring device 102 monitors the attributes associated with the AOI 202. The second mode may correspond to a stop mode of operation where the attributes monitoring of the AOI 202 by the corresponding monitoring device 102 is stopped, however, the monitoring device 102 remains in a switched-ON condition.

Further, the monitoring devices 102 in the second/stop mode may be configured to be operatively connected to the external devices to allow the extraction of stored data pertaining to the monitored attributes of the AOI 202. The external devices may be one or more of mobile phones, computers, laptops, tablets, servers, databases, and the like, where the attributes monitored/recorded by the monitoring devices 102 for a predefined time during the first mode may be stored. In one or more embodiments, the external devices may be wirelessly connected to the monitoring devices 102 through a network to allow the extraction of stored data pertaining to the monitored attributes of the AOI. In one or more embodiments, the external devices may be operatively connected to the monitoring devices 102 through a USB channel or wired media to allow the extraction of stored data pertaining to the monitored attributes of the AOI.

Referring to FIGs. 1 and 2, the monitoring device 102 in the first mode may be configured to generate and transmit a set of beacon signals at a predefined interval. The set of beacon signals may comprise data pertaining to the assigned id of the corresponding monitoring device and a status indicative of the first mode. Further, the monitoring device 102 in the second mode may be configured to listen or detect the set of beacon signals transmitted by other monitoring devices 102 that are in the start mode. Accordingly, the monitoring device 102 in the second mode may analyze the detected set of beacon signals and automatically switch to the first mode or AutoStart when the trip-id of the corresponding monitoring device in the second mode matches with the trip-id of the monitoring device transmitting the beacons signals in the first mode, however, their operating status or mode do not match. Thus, even if the user fails to manually switch the monitoring device(s) 102 back to the first mode after collecting the stored data, the monitoring device(s) in the second mode may AutoStart or switch to the first mode as its companion monitoring devices that have the same trip-id and are already in the first mode.

For instance, as shown in FIG. 4, the monitoring devices 102-1, 102-3, and 102-4 may be in the first mode when the container 104 is in transit during a trip or when the event monitoring at the AOI 202 is in process. The user may manually switch the monitoring devices 102-1, 102-3, and 102-4 to the first mode before the transit or the event monitoring process. However, the user may fail to manually switch the monitoring device 102-2 to the first mode. In such case, the monitoring devices 102-1, 102-3, and 102-4 (in the first mode) may generate the beacon signals, at predefined intervals, comprising the unique id and the status indicating that monitoring devices 102-2 have to be in the first mode. Further, the monitoring device 102-2 may detect or listen the beacon signals transmitted by any of the monitoring devices 102-1, 102-3, and/or 102-4 based on the Bluetooth coverage of the corresponding monitoring devices 102. The monitoring device 102-2 may match its unique id and status with the unique id and status extracted from the beacon signals. Accordingly, the monitoring device 102-2 in the second mode may AutoStart or switch to the first mode as its companion monitoring devices 102-1, 102-3, and 102-4 that have the same trip-id and are already in the first mode.

Referring to FIG. 3, the functional modules of monitoring device 102 of the system 100, 200 are illustrated. The monitoring device 102 comprises a processing unit comprising one or more processor(s) 302 operatively coupled to a memory 304. The one or more processor(s) 302 may be implemented as one or more microprocessors, microcomputers, microcontrollers, digital signal processors, central processing units, logic circuitries, and/or any devices that manipulate data based on operational instructions. Among other capabilities, processor(s) 302 are configured to fetch and execute computer-readable instructions stored in the memory 304 of monitoring device 102. The memory 304 may store one or more computer-readable instructions or routines, which may be fetched and executed to create or share the data units over a network service. The memory 304 may comprise any non-transitory storage device including, for example, volatile memory such as RAM, or non-volatile memory such as EPROM, flash memory, and the like.

Monitoring device 102 also comprises an interface(s) 306 that may comprise a variety of interfaces, for example, interfaces for data input and output devices, referred to as I/O devices, storage devices, external devices, and the like. The interface(s) 306 includes a Bluetooth module 306-1 to facilitate communication of the monitoring device 102 with each other and with the external devices through a network. The interface(s) 306 may further include a USB interface/module 306-2 to facilitate wired communication of the monitoring device 102 with the external devices. The interface(s) 306 may also provide a communication pathway for one or more internal components or units of the monitoring device 102 and with a mobile device of an admin. Examples of such internal components include, but are not limited to, processing engine(s) and a database.

The processing engine(s) is implemented as a combination of hardware and programming (for example, programmable instructions) to implement one or more functionalities of the processing engine(s). In the examples described herein, such combinations of hardware and programming may be implemented in several different ways. For example, the programming for the processing engine(s) may be processor-executable instructions stored on a non-transitory machine-readable storage medium, and the hardware for the processing engine(s) may comprise a processing resource (for example, one or more processors), to execute such instructions. In the present examples, the machine-readable storage medium may store instructions that, when executed by the processing resource, implement the processing engine(s). In such examples, monitoring device 102 comprises the machine-readable storage medium storing the instructions and the processing resource to execute the instructions, or the machine-readable storage medium may be separate but accessible to monitoring device 102 and the processing resource. In other examples, the processing engine(s) may be implemented by an electronic circuitry. The database may comprise data that is either stored or generated as a result of functionalities implemented by any of the components of the processing engine(s) or system 100, 200.

In one or more embodiments, the monitoring device 102 may include one or more sensors 308 configured to monitor the attributes of one or more zones in the containers or AOI. These attributes may include temperature, light, humidity, gas composition, and pressure, but are not limited to the like. These monitored attributes are indicative of the quality of products or goods being stored in the different zones of the containers 104 or AOI 202. The sensors 308 may include temperature sensors, light sensors, humidity sensors, gas sensors, and pressure sensors, but are not limited to the like. The captured attribute data of the zones of the containers 104 or the AOI 202 may then be stored in the data recorder 310 of the monitoring device 102, which may then be retrieved by connecting the external devices to the corresponding monitoring devices 102. In one or more embodiments, the monitoring device 102 may include a human machine interface (HMI) comprising a keyboard 312, a display 314, and the like, to allow users to view the attributes monitored/collected by the monitoring devices 102 and communicate with the monitoring devices 102.

In one or more embodiments, all the sensors 308 of the monitoring device 102 can be positioned over a single frame or housed in a single housing that can be installed in different zones of the containers 104 or the AOI 202. In some embodiments, the sensors 308 can be distributed at different positions within the zones of containers 104 or AOI 202, and these distributed sensors 308 can be operatively connected to the processor 302 of the monitoring device via wired media or wireless media.

The processing unit 302, 204 may enable the sensors 308 of the monitoring device 102 to monitor the attributes of the container 104 or AOI 202 when switched to the first mode, and further enable the Bluetooth module 306-1 to generate and transmit the set of beacon signals at the predefined interval when the monitoring device 102 is in the first mode. Further, the processing unit 302, 304 may enable the Bluetooth module 306-1 of the monitoring devices 102 that are in the second mode to detect the set of beacon signals, and automatically switch the monitoring device 102 from the second mode to the first mode based on the analysis of the set of beacon signals.

The monitoring devices 102 may further include an image-capturing device such as a camera that may be configured to capture an image of the zones of the containers 104 or AOI 202 that may allow the users to monitor the real-time status or images of the zones or capture images of the zones of the container 104 or the AOI 202. The monitoring device 102 further 102 includes a power source such as a battery that is within the housing of the monitoring device 102 to supply electrical power to the components of the monitoring device 102.

The monitoring device 102 includes the processor 302, the memory 304, the Bluetooth Module 306-1, the USB interface 306-2, the sensors 308, the data recorder 310, the battery, and other components, being configured within a single housing that can be easily positioned at predefined locations in the containers of the shipment or the predefined locations at the AOI.

In one or more embodiments, monitoring devices 102 allow an admin to define or configure a trip automation rule for the shipment and/or the event monitoring protocol for the AOI. The admin can define or configure the trip automation rule or event monitoring protocol as per their requirements using a desktop application. The admin may assign a unique trip-id to the containers associated with a single shipment. Further, the admin may assign a unique id to the locations associated with the AOI for event monitoring. The assigned unique id of the monitoring devices remains stored in the memory 304, which may then be modified by the admin once the trip or event monitoring is completed.

Further, for each container of the shipment or the locations at the AOI to be monitored, alarm conditions can be defined in the trip automation rule or event monitoring protocol for each zone within the containers or the locations at the AOI, respectively. These conditions can be implemented as per expert guidance or as per the user's unique monitoring requirements. The elements for each zone specification alarm include severity of alarm (information, warning, critical), sensor type to be monitored (temperature, light, CO₂, humidity), alarm frequency per trip (once, continuous, reset after raising, reset after acknowledging), alarm type (single, continuous, cumulative, degree minutes, rate of change), alarm threshold in time (days, hours, minutes), threshold type (high or low), sensor threshold (degrees for temperature, and percentage for light, CO₂, humidity), and zone specifications variables for each sensor type (low, ideal, high), but not limited to the like.

For each shipment, a container group can be defined by the admin in the trip automation rule, which includes a grouping of 1 to N containers. Further, a set of monitoring devices 102 is assigned to a specific container that is assigned to a specific container group defined in the trip automation rule. The serial number of each container and the assigned monitoring devices 102 for each container are saved in the database associated with the system 100 for future validation. Further, all the monitoring devices 102 associated with each shipment may be assigned a unique trip-id, which may also be saved in the database associated with the system 100.

For each location of the AOI, a set of monitoring devices 102 is assigned to a specific location that is defined in the event monitoring protocol. The serial number of the assigned monitoring devices for each location at the AOI are saved in the database associated with the system 200 for future validation. Further, all the monitoring devices associated with each location or the AOI may be assigned a unique id, which may also be saved in the database associated with the system 200.

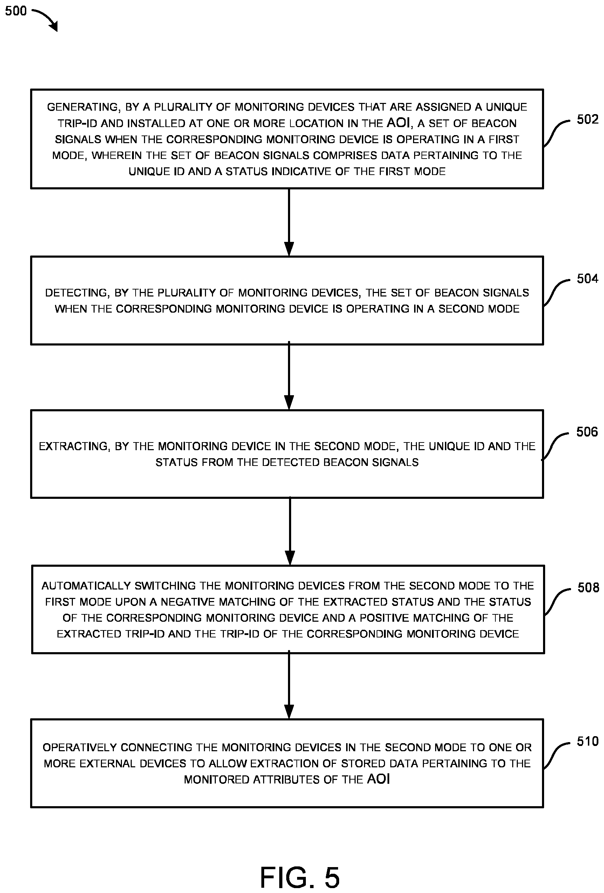

Referring to FIG. 5, exemplary steps involved in a method for controlling the operation of monitoring devices associated with an area of interest (AOI) are illustrated. Method 500 involves a plurality of monitoring devices 102 of FIG. 3 that are assigned a unique trip-id and installed at one or more locations in the AOI. The AOI may be one or more container associated with a shipment as already elaborated in detail in FIG. 1. Further, the AOI may also be one or more room associated with a storage area or storage space as already elaborated in detail in FIG. 2. Each of the monitoring devices may be configured to be switched between a first mode, and a second mode. The first mode corresponds to a start mode of operation where the monitoring device monitors and stores attributes of the AOI. Further, the second mode corresponds to a stop mode of operation where the attributes monitoring by the corresponding monitoring device is stopped and the monitoring devices in the second mode may be configured to be operatively connected to one or more external devices to allow extraction of stored data pertaining to the monitored attributes of the one or more container.

Method 500 includes step 502 of generating, by the monitoring devices, a set of beacon signals at predefined intervals when the corresponding monitoring device is operating in the first mode. The set of beacon signals may comprise data pertaining to the unique id of the corresponding monitoring device and a status indicative of the first mode. Method 500 includes step 504 of detecting, by the monitoring device, the set of beacon signals when the corresponding monitoring device is operating in the second mode. The monitoring devices in the second mode may be configured to automatically switch to the first mode based on analysis of the detected beacon signals.

Method 500 further includes step 506 of extracting, by the monitoring device in the second mode, the unique id and the status (start mode status) from the beacon signals received from the monitoring devices that are in the first mode. Further, method 500 includes step 508 of automatically switching the monitoring devices from the second mode to the first mode upon a negative matching of the extracted status and the status of the corresponding monitoring device and a positive matching of the extracted trip-id and the trip-id of the corresponding monitoring device.

Method 500 further includes step 510 of the steps of operatively connecting the monitoring devices in the second mode to one or more external devices to allow extraction of stored data pertaining to the monitored attributes of the AOI.

Accordingly, the monitoring device in the second mode may analyze the detected set of beacon signals and automatically switch to the first mode when the trip-id of the corresponding monitoring device in the second mode matches with the trip-id of the monitoring device transmitting the beacons signals in the first mode, however, their operating status or modes do not match. Thus, even if the user fails to manually switch the monitoring device(s) back to the first mode after collecting the stored data, the monitoring device(s) in the second mode may autostart or switch to the first mode as its companion monitoring devices that have the same trip-id and are already in the first mode.

While the invention has been described with reference to exemplary embodiments, it will be understood by those skilled in the art that various changes may be made and equivalents may be substituted for elements of the described embodiments without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. A system (100) to control operation of monitoring devices (102) associated with shipments, the system comprising:
a plurality of monitoring devices (102) assigned to and installed in one or more container (104) associated with a shipment, wherein a unique trip-id is assigned to each of the monitoring devices during a trip,
wherein each of the monitoring devices is configured to be switched between a first mode, and a second mode: and
wherein:
the monitoring device in the first mode is configured to generate and transmit, at a predefined interval, a set of beacon signals comprising data pertaining to the trip-id and a status indicative of the first mode; and
the monitoring device in the second mode is configured to automatically switch to the first mode upon detecting and analyzing the set of beacon signals.

2. A system (200) to control operation of monitoring devices (102) associated with an area of interest, AOI (202), the system comprising:
a plurality of monitoring devices (102) assigned to and installed at one or more location in the AOI, wherein a unique id is assigned to each of the monitoring devices,
wherein each of the monitoring devices is configured to be switched between a first mode, and a second mode: and
wherein:
the monitoring device in the first mode is configured to generate and transmit, at a predefined interval, a set of beacon signals comprising data pertaining to the unique id of the corresponding monitoring device and a status indicative of the first mode; and
the monitoring device in the second mode is configured to automatically switch to the first mode upon detecting and analyzing the set of beacon signals.

3. The system of claim 1 or 2, wherein the monitoring device in the second mode is configured to:
detect the set of beacon signals generated by at least one of the monitoring devices that is in the first mode;
extract the trip-id or the unique id and the status from the detected beacon signals; and
automatically switch from the second mode to the first mode upon a negative matching of the extracted status and the status of the corresponding monitoring device and a positive matching of the extracted trip-id or unique id and the trip-id or unique id of the corresponding monitoring device.

4. The system of any preceding claim, wherein the first mode corresponds to a start mode of operation where the monitoring device monitors and stores one or more attributes associated with the one or more container or the AOI, and wherein the second mode corresponds to a stop mode of operation where the attributes monitoring by the corresponding monitoring device is stopped.

5. The system of any preceding claim, wherein the monitoring devices in the second mode are configured to be operatively connected to one or more external devices to allow extraction of stored data pertaining to the monitored attributes of the one or more container or the one or more location.

6. The system of any preceding claim, wherein each of the monitoring devices comprises a Bluetooth module (306-1) that enables the generation and transmission of the set of beacon signals in the first mode and enables the detection of the set of beacon signals in the second mode.

7. The system of any preceding claim, wherein each of the monitoring devices comprises:
one or more sensor (308) to monitor the attributes of the one or more container or
the AOI; and
a data recorder (310) to store the monitored attributes.

8. The system of any preceding claim 1, wherein each of the monitoring devices comprises a processing unit operatively coupled to one or more of the one or more sensor, the Bluetooth module, and the data recorder, wherein the processing unit comprises a processor (302) coupled to a memory (304) storing instructions executable by the processor and configured to:
enable the one or more sensor to monitor the attributes of the one or more container or the AOI in the first mode;
enable the Bluetooth module to generate and transmit the set of beacon signals at the predefined interval in the first mode;
enable the Bluetooth module to detect the set of beacon signals in the first mode; and
switch the monitoring devices from the second mode to the first mode based on the analysis of the set of beacon signals.

9. A method for controlling operation of monitoring devices (102) associated with an area of interest, AOI (202), the method comprising the steps of:
generating, by a plurality of monitoring devices (102) that are assigned a unique trip-id and installed at one or more location in the AOI, a set of beacon signals when the corresponding monitoring device is operating in a first mode, wherein the set of beacon signals comprises data pertaining to the unique id and a status indicative of the first mode; and
detecting, by the plurality of monitoring devices, the set of beacon signals when the corresponding monitoring device is operating in a second mode;
wherein the monitoring devices in the second mode are configured to automatically switch to the first mode based on analysis of the detected beacon signals.

10. The method of claim 9, wherein the method comprises the steps of:
detecting, by the monitoring device in the second mode, the set of beacon signals generated by at least one of the monitoring devices that is in the first mode;
extracting, by the monitoring device in the second mode, the unique id and the status from the detected beacon signals; and
automatically switching the monitoring devices from the second mode to the first mode upon a negative matching of the extracted status and the status of the corresponding monitoring device and a positive matching of the extracted trip-id and the trip-id of the corresponding monitoring device.

11. The method of claim 9 or 10, wherein the method comprises the steps of operatively connecting the monitoring devices in the second mode to one or more external devices to allow extraction of stored data pertaining to the monitored attributes of the AOI.

12. The method of claim 9, 10 or 11, wherein the AOI is one or more container (104) associated with a shipment.

13. The method of any of claims 9 to 12, wherein the AOI is one or more room associated with a storage area.
